# EUROPEAN PATENT SPECIFICATION

(11) **EP 4 416 526 B1**
(45) Date of publication and mention of the grant of the patent: **17.12.2025**
(21) Application number: 21806304.8
(22) Date of filing: 15.10.2021
(51) Int. Cl.: G01S 19/04, G01S 19/07, G01S 19/14

(54) **WARNING SYSTEM AND METHOD FOR PROVIDING SAFETY AT CONSTRUCTION SITE**
WARNSYSTEM UND VERFAHREN ZUR BEREITSTELLUNG VON SICHERHEIT AN DER BAUSTELLE
SYSTÈME ET PROCÉDÉ D'AVERTISSEMENT POUR LA FOURNITURE D'UNE SÉCURITÉ AU NIVEAU D'UN SITE DE CONSTRUCTION

(43) Date of publication of application: 21.08.2024
(73) Proprietor: Snaketronics Oy, 33410 Tampere (FI)
(72) Inventor: TUOKKO, Ilkka, 33410 Tampere (FI); KOSKI, Olli-Pekka, 02880 Veikkola (FI)
(74) Representative: Moosedog Oy
(86) International application number: PCT/FI2021/050691
(87) International publication number: WO 2023/062267

(56) References cited:
- US-A1- 2010 070 179
- US-A1- 2013 299 440
- US-A1- 2015 161 872

## Description

### TECHNICAL FIELD

The present disclosure relates to warning systems for providing safety at a construction site. Moreover, the present disclosure also relates to methods for providing safety at the construction site.

### BACKGROUND

Construction sites, ports, and similar sites usually have one or more construction equipment such as tower cranes or other cranes to move heavy loads. For example, tower cranes are employed on construction sites for moving and lifting of steel rods for construction of towers in high rise buildings. Such activities may be dangerous, and thus precautions need to be taken to prevent accidents and damages at such sites.

Workers on the construction site are usually present in the vicinity of a load to be lifted or moved and there is a risk of a worker being present and going unnoticed under the load, while the load is being lifted. Lifting over people is therefore generally not allowed due to safety concerns. For example, when the load is being lifted over people and the load falls down suddenly due to malfunctioning of the tower crane, failure of an attachment of the load and the like, the people may be seriously or fatally injured. Hence, a crane operator is typically entrusted with the responsibility of moving the load in a suitable manner to prevent lifting above the people. However, human judgment and actions are prone to errors, and accidents on construction sites are prevalent.

Various systems and methods have been developed to avoid collisions and take safety aspects into account at construction sites. A system and method for monitoring a lifting device is disclosed in US 2010/070179 A1. Systems and methods for collision avoidance are disclosed in US 2013/299440 A1. Further, systems and methods for warning of proximity in a worksite are disclosed in US 2015/161872 A1

Therefore, in light of the foregoing discussion, there exists a need to overcome the aforementioned drawbacks associated with existing solutions for providing safety on construction sites.

### SUMMARY

The present disclosure seeks to provide a warning system for providing safety at a construction site. The present disclosure also seeks to provide a method for providing safety at the construction site. An aim of the present disclosure is to provide a solution that overcomes at least partially the problems encountered in prior art.

In one aspect, an embodiment of the present disclosure provides a warning system for providing safety at a construction site, the warning system comprising:
a first device comprising a first geo-spatial positioning receiver for receiving, in operation, first signals from a geo-spatial positioning system, the first geo-spatial positioning receiver being configured to calculate a first position of a load based on the first signals;
at least one second device comprising a second geo-spatial positioning receiver for receiving, in operation, second signals from the geo-spatial positioning system, the second geo-spatial positioning receiver being configured to calculate a second position of the at least one second device based on the second signals, the at least one second device being communicably coupled to the first device;
a base station comprising a third geo-spatial positioning receiver for receiving, in operation, third signals from the geo-spatial positioning system, the third geo-spatial positioning receiver being configured to calculate a third position of the base station based on the third signals, the base station being configured to generate a first correction signal and a second correction signal based on the third position, wherein the base station is communicably coupled to the first device and the at least one second device; and
a third device for enabling operation of a construction equipment to move the load, wherein the third device is communicably coupled to the first device and the at least one second device,
wherein,
   - the base station is configured to send the first correction signal and the second correction signal to the first device and the at least one second device, respectively;
   - the first device is configured to determine a fourth position of the load, based on the first position and the first correction signal;
   - the at least one second device is configured to determine a fifth position of the at least one second device, based on the second position and the second correction signal;
   - the third device is configured to send, to the first device, load information of the load;
   - the first device is configured to define a danger area surrounding the load that changes dynamically as at least the fourth position of the load and the load information change;
   - the first device is configured to send danger area information, to the at least one second device, wherein the danger area information pertains to the danger area;
   - the at least one second device is configured to determine whether an alert condition is present, based on the fifth position and the danger area information; and
   - when it is determined that the alert condition is present, the at least one second device is configured to activate a first alarm on the at least one second device.

In another aspect, an embodiment of the present disclosure provides a method for providing safety at a construction site using a warning system, the method comprising:
- receiving first signals from a geo-spatial positioning system for calculating a first position of a load based on the first signals;
- receiving second signals from the geo-spatial positioning system for calculating a second position of the at least one second device based on the second signals;
- receiving third signals from the geo-spatial positioning system for calculating a third position of the base station based on the third signals;
- generating a first correction signal and a second correction signal based on the third position, and sending the first correction signal and the second correction signal from the base station to a first device and the at least one second device, respectively;
- determining a fourth position of the load, based on the first position and the first correction signal;
- determining a fifth position of the at least one second device, based on the second position and the second correction signal;
- sending, from a third device to the first device, load information of the load;
- defining a danger area surrounding the load that changes dynamically as at least the fourth position of the load and the load information change;
- sending danger area information, from the first device to the at least one second device, wherein the danger area information pertains to the danger area;
- determining whether an alert condition is present, based on the fifth position and the danger area information; and
- when it is determined that the alert condition is present, activating a first alarm on the at least one second device.

Embodiments of the present disclosure substantially eliminate or at least partially address the aforementioned problems in the prior art and provide safety at the construction site by accurately ascertaining presence of an alert condition by data processing and activating the first alarm when the alert condition is present.

Additional aspects, advantages, features, and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIGs. 1A, 1B and 1C are block diagrams of a warning system for providing safety at a construction site, in accordance with different embodiments of the present disclosure;
FIG. 2 is an exemplary schematic implementation of the warning system for providing safety at the construction site, in accordance with an embodiment of the present disclosure;
FIG. 3 is a top view of a danger area of FIG. 2, in accordance with an embodiment of the present disclosure; and
FIGs. 4A and 4B illustrate a flowchart depicting steps of a method for providing safety at the construction site using the warning system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a warning system for providing safety at a construction site, the warning system comprising:
a first device comprising a first geo-spatial positioning receiver for receiving, in operation, first signals from a geo-spatial positioning system, the first geo-spatial positioning receiver being configured to calculate a first position of a load based on the first signals;
at least one second device comprising a second geo-spatial positioning receiver for receiving, in operation, second signals from the geo-spatial positioning system, the second geo-spatial positioning receiver being configured to calculate a second position of the at least one second device based on the second signals, the at least one second device being communicably coupled to the first device;
a base station comprising a third geo-spatial positioning receiver for receiving, in operation, third signals from the geo-spatial positioning system, the third geo-spatial positioning receiver being configured to calculate a third position of the base station based on the third signals, the base station being configured to generate a first correction signal and a second correction signal based on the third position, wherein the base station is communicably coupled to the first device and the at least one second device; and
a third device for enabling operation of a construction equipment to move the load, wherein the third device is communicably coupled to the first device and the at least one second device,
wherein,
   - the base station is configured to send the first correction signal and the second correction signal to the first device and the at least one second device, respectively;
   - the first device is configured to determine a fourth position of the load, based on the first position and the first correction signal;
   - the at least one second device is configured to determine a fifth position of the at least one second device, based on the second position and the second correction signal;
   - the third device is configured to send, to the first device, load information of the load;
   - the first device is configured to define a danger area surrounding the load that changes dynamically as at least the fourth position of the load and the load information change;
   - the first device is configured to send danger area information, to the at least one second device, wherein the danger area information pertains to the danger area;
   - the at least one second device is configured to determine whether an alert condition is present, based on the fifth position and the danger area information; and
   - when it is determined that the alert condition is present, the at least one second device is configured to activate a first alarm on the at least one second device.

In another aspect, an embodiment of the present disclosure provides a method for providing safety at a construction site using a warning system, the method comprising:
- receiving first signals from a geo-spatial positioning system for calculating a first position of a load based on the first signals;
- receiving second signals from the geo-spatial positioning system for calculating a second position of the at least one second device based on the second signals;
- receiving third signals from the geo-spatial positioning system for calculating a third position of a base station based on the third signals;
- generating a first correction signal and a second correction signal based on the third position, and sending the first correction signal and the second correction signal from the base station to a first device and the at least one second device, respectively;
- determining a fourth position of the load, based on the first position and the first correction signal;
- determining a fifth position of the at least one second device, based on the second position and the second correction signal;
- sending, from a third device to the first device, load information of the load;
- defining a danger area surrounding the load that changes dynamically as at least the fourth position of the load and the load information change;
- sending danger area information, from the first device to the at least one second device, wherein the danger area information pertains to the danger area;
- determining whether an alert condition is present, based on the fifth position and the danger area information; and
- when it is determined that the alert condition is present, activating a first alarm on the at least one second device.

The present disclosure provides the aforementioned warning system and the aforementioned method. The warning system and the method prevents occurrence of accidents on account of workers from being left under the load to be lifted, by accurately finding the fourth position of the load and the fifth position of the at least one second device (that is associated with such workers). The first alarm is timely activated when a given person carrying the at least one second device or a given vehicle having the at least one second device attached thereon, is dangerously close to the load. In this way, the system and method utilize data processing to accurately ascertain presence of the alarm condition, and efficiently activate the first alarm when the alarm condition is present, for reliably ensuring safety at the construction site. This prevents accidents at the construction site. Also, the at least one second device does not require internet connection for communication with other devices. The warning system and the method does not require that persons should register online for being provided safety by way of activation of the first alarm on the at least one second device. Hence, the warning system and the method beneficially provide safety for an unlimited number of persons, at construction sites. Furthermore, the at least one second device does not necessarily need to send any data, as accurate determination of positions and activation of the first alarm can be done with a one-way data connection. Hence, in the system, radiation is minimized.

The present disclosure relates to the warning system for providing safety at the construction site. Herein, the construction site may include any area on which construction works such as, construction of buildings, bridges, and the like, are carried out. It may be appreciated that heavy construction equipment may be deployed on the construction site to lift or move loads for carrying out the construction work. Herein, the load may be construction materials such as, building modular part, fitting, furniture, bricks, concrete, steel rods, shuttering materials, and rebars. More generally, the load may be any kind of load that need to be lifted and/or moved from one position to other on the construction site. In addition to construction sites, the warning system can be used in ports and at any other place where loads are lifted.

The warning system comprises the first device comprising the first geo-spatial positioning receiver for receiving, in operation, first signals from the geo-spatial positioning system, the first geo-spatial positioning receiver being configured to calculate the first position of the load based on the first signals. The geo-spatial positioning system may be, for example, a Global Navigation Satellite System (GNSS), a Global Positioning System (GPS), or any other satellite constellation providing signals from space that transmit positioning and timing data to GNSS receivers. The geo-spatial positioning receiver calculates its position by precisely timing signals sent by geo-spatial positioning system high above the Earth. Each satellite of the geo-spatial positioning system may continually transmit signals that include a time the signal was transmitted and a satellite position at the time of signal transmission. The geo-spatial positioning system may send the first signals to the first geo-spatial positioning receiver in real time, periodically, intermittently, or in another specified manner. The first geo-spatial positioning may then calculate the first position of the load based on the first signals. Optionally, the first device is attached with the load. The first device may be attached to the load by any attachment means, for example, by using a magnet, a collar, a tape, a wire, a band, bolts and/or screws. The attachment means may be easily detachable (i.e., removable) and/or may facilitate quick locking. Alternatively, optionally, the first device is attached to any part of the construction equipment such as, a crane hook, a pulley above the crane hook, a trolley on a jib, and the like. In such a case, the first geo-spatial positioning receiver receives, in operation, a given first signal from the geo-spatial positioning system to determine a given position of the first device, wherein the first position of the load is determined based on the given position and a pre-known offset between the load and the part of the construction equipment to which the first device is attached.

The warning system comprises the at least one second device comprising the second geo-spatial positioning receiver for receiving, in operation, second signals from the geo-spatial positioning system, the second geo-spatial positioning receiver being configured to calculate the second position of the at least one second device based on the second signals, the at least one second device being communicably coupled to the first device. Herein, a given second device may be a device having processing capabilities. Optionally, the given second device is carried by persons visiting or working on the construction site. Herein, a given person carries the given second device with him/her when he/she moves on the construction site and/or when he/she does work on the construction site. The given second device can be with the given person continuously during working/moving hours on the construction site. The second device is preferably lightweight and easy to carry. As an example, the given second device may be associated with an employee of an entity undertaking construction activities at the construction site (and may be thus understood to be an employee module). For example, the given second device may be attached to the employee's equipment, such as a protective jacket, belt, or helmet. Optionally, the given second device is arranged on a vehicle present in the construction site, such as an earthmoving machine, all-terrain vehicle (ATV), excavator, forklift, a crane, and the like. The at least one second device may communicate with the geo-spatial positioning system to receive the second signals for determining the second position of the at least one second device. It may be noted that the at least one second device does not require internet connection. The warning system also does not require that persons should register online by for example, entering a user id, a password and other credentials, before using the at least one second device for safety. That is, the persons present on the construction site may directly use the at least one second device. Any of the persons on the construction site may be provided with the at least one second device, and the number of the at least one second device is not limited anyhow by the warning system. For example, around hundred persons may be present on the construction site and each person may be provided with the at least one second device that may be used for ensuring safety of each person. Optionally, the at least one second device is moved and its display shows a measured horizontal distance to the first device.

The warning system comprises the a base station comprising the third geo-spatial positioning receiver for receiving, in operation, third signals from the geo-spatial positioning system, the third geo-spatial positioning receiver being configured to calculate the third position of the base station based on the third signals, the base station being configured to generate a first correction signal and a second correction signal based on the third position, wherein the base station is communicably coupled to the first device and the at least one second device. The base station is communicably coupled to the first device and the at least one second device. The base station may be mobile or stationary. The base station may be arranged on a given hook module or a given crane hook. The third geo-spatial positioning receiver of the base station may determine its own location, which is considered to be a known position of the base-station herein and may receive correction data from the geo-spatial positioning system. The base station is configured to determine a difference between the third position and the known position of the base station, and to generate a base correction signal based on the determined difference. Next, the base station is configured to generate the first correction signal and the second correction signal, based on the base correction signal. Optionally, the first correction signal and/or the second correction signal are equal to the base correction signal.

Optionally, the base station comprises a processor configured to compare the known position of the base station with the third position by employing a Real-time kinematic positioning technique, to generate the first correction signal and the second correction signal. The Real-time kinematic (RTK) positioning technique is known in the art, and typically employs an antenna, a given geo-spatial positioning receiver (such as a GNSS receiver), and radio link to provide RTK correction signals. It will be appreciated that using the RTK positioning technique, the base station may determine its own position by carrier phase measurement technique of a signal received by the GNSS receiver. The RTK positioning technique is more accurate than timing based GNSS techniques or GPS techniques. The base station generates the first correction signal and the second correction signal by comparing its own known position with the third position to identify any error between said positions and then determines the correction data according to such error.

The warning system comprises the third device for enabling operation of the construction equipment to move the load, wherein the third device is communicably coupled to the first device and the at least one second device. The third device may be a telephone, a smart phone, a portable digital device, a computer, a tablet, or the like. The third device may be referred as an operator's device that may act like a remote control by means of which an operator controls the construction equipment. The operator may use the third device to define operational settings (for example, the operator may command the first device remotely, or may set different settings for the load).

The base station is configured to send the first correction signal and the second correction signal to the first device and the at least one second device. Such sending may be performed in real time, or after a specified time interval from the generation of the first and second correction signals. The first device is configured to determine the fourth position of the load, based on the first position and the first correction signal. The at least one second device is configured to determine the fifth position of the at least one second device, based on the second position and the second correction signal. It may be appreciated that the first position and the second position may include varying degrees of errors. To mitigate the aforesaid errors, the first correction signal and the second correction signal are applied to the first position and the second position, to obtain the fourth position and the fifth position, respectively. The fourth position and the fifth position are more accurate than the first position and the second position, respectively, and this enables in accurately determining whether alert conditions are present. Optionally, when determining the fourth position and/or the fifth position, at least one mathematical formula is employed.

The third device is configured to send, to the first device, load information of the load. It will be appreciated that the construction site may include a plurality of loads and the construction equipment may need to lift or move a particular load from amongst the plurality of loads. The load information may help in identifying the load from the plurality of load that need to be lifted or moved. Moreover, the load information may indicate specifications of a way the load is to be lifted.

Optionally, the load information comprises at least one of: a size of the load, a weight of the load, a width of the load, a lifting height of the load, a direction of lifting the load, a speed of lifting the load, a path of lifting the load, a swing of the load, a quality of the load, a purpose of lifting the load, a time of lifting the load, a duration of lifting the load. Herein, the size of the load may include dimension of load such as, a length, a breadth, and a height of the load. The lifting height of the load may be the height to which the load may need to be lifted. The direction of lifting the load may be the direction in which the load may be lifted. The speed of lifting the load may be a rate at which the load may be lifted to the lifting height. The path of lifting the load may be the path to be followed when the construction equipment lifts the load. The swing of the load may be an angle by which the load may swing on either side of its mean position when the load is being lifted up or down. The quality of the load may determine a measure indicating a standard of what is to be lifted such as, concrete, steel rods, slabs, and the like. Loads that are harder to lift may have a low quality, and vice versa. The purpose of lifting the load may indicate an intent with which the load is lifted. For example, steel rods may need to be lifted for construction of towers, whereas gravel may be lifted for loading in a concrete mixer. The time of lifting the load may be a time instant at which the load needs to be lifted. The duration of lifting the load may be a time period in which the load may be lifted.

The first device is configured to define the danger area surrounding the load, based at least on the fourth position of the load and the load information. The danger area is defined using a function or an algorithm that takes the fourth position of the load and the load information as an input. For example, an exponential function that takes factors such as, the fourth position, the size of load, the weight of load, and the lifting height of the load as the input, may be used for defining the danger area. As the aforesaid factors change, the danger area also changes dynamically. It may be appreciated that when the load is being lifted or moved, persons near that area may get hurt in case of accidents such as, swift unloading of the load being lifted due to malfunctioning of the construction equipment that is employed to lift the load, slippage of the load, breaking off the load from a hook module, and the like. Hence, the danger area may be defined as a region surrounding the given load wherein there is likelihood of danger to safety of the persons. The danger area is defined so that no persons may come in the vicinity of the given load when the given load is being lifted or moved.

The first device is configured to send the danger area information, to the at least one second device, wherein the danger area information pertains to the danger area. Once the danger area is defined, the danger area information may be sent to the at least one second device so that the at least one second device may process and interpret the danger area information to know about the danger area that needs to be avoided by the persons/vehicle(s) carrying the at least one second device.

Optionally, the danger area information comprises at least one of: the fourth position of the load, the load information, a size of the danger area, a shape of the danger area, a function indicating a way the size and/or the shape of the danger area varies according to the fourth position and the load information, a number of sub-areas within the danger area, sizes and relative arrangements of the sub-areas. The size of the danger area may be defined by at least one dimension of the danger area and may depend on the load information (and especially, on the size of the load and the lifting height of the load). The shape of the danger area may define a form and contours of the danger area. In an embodiment, the danger area may be defined as a two-dimensional (2D) shape. For example, the danger area may be defined as a circle on the ground, under the load. In an alternative embodiment, the danger area may be defined as a three-dimensional (3D) shape. For example, the danger area may be defined as a cone projecting upwards from the ground, under the load. The size of the danger area in each lateral direction is preferably greater than the dimensions of the load in the given lateral direction. As, the load is being lifted, the load may swing in the given lateral direction to a maximum distance. Hence, apart from the persons who are just below the load, the safety of persons presents up till maximum distance in the given lateral direction may be compromised. Therefore, to take the effect of swing into account, the size of the danger area is made greater than the load in the lateral direction. The danger area is preferably defined to extend below the load to be lifted, outward from a center of gravity of the load. The danger area can extend radially, vertically, or laterally outwards from edges of the load to be lifted or from a desired point defined by the third device. The function indicating the way the size and/or the shape of the danger area varies according to the fourth position and the load information may also define the danger area. For example, the danger area is preferably dynamically defined in such a way that the size of the danger area changes as the load is moved at different speeds. The size of the danger area also changes as a function of the lifting height of the load and as a function of the speed of lifting the load. For example, as the lifting height of the load and/or the speed of lifting the load increases, the danger area also increases. The size of the danger area may also change as a function of the path of lifting the load. The size of the danger area can change linearly, non-linearly, or stepwise as a function of speed of lifting the load and/or lifting height of the load, or the path of lifting the load. For example, as a given lateral speed of lifting the load increases, the size (area) of the danger area increases exponentially. In some embodiments, the danger area may include a plurality of sub-areas with different levels of danger severity. Each sub-area may have different size and may be relatively arranged with respect to each other, for forming the danger area.

The at least one second device is configured to determine whether the alert condition is present, based on the fifth position and the danger area information. The alert condition is present when the person carrying the at least one second device or when the vehicle on which the at least one second device is arranged, is in danger. Presence of the alert condition is undesirable and poses a safety risk. Therefore, the system reliably and efficiently determines whether the alert condition is present in a timely manner, so that corrective steps to ensure safety can be taken when the alert condition is present.

Optionally, the alert condition is at least one of:
- the fifth position lies in the danger area;
- the fifth position is in proximity of the danger area and the fifth position lies along a path of movement of the load;
- the fifth position is in proximity of the danger area and the fifth position is changing in a manner that the at least one second device is approaching the load to be moved;
- the fifth position is in proximity of the danger area, and an actual weight of the load is greater than the weight of the load; and
- a given fifth position of one of the at least one second device lies in or is in proximity of the danger area.

In this regard, when the fifth position lies in the danger area, it means that the at least one second device is in the danger area and hence, the person carrying the at least one second device or the vehicle on which the at least one second device is arranged, is in danger. In such a case, the person or the vehicle have a high safety risk as they may get hurt by the load due to accidental dropping of the load being lifted. When the fifth position is in proximity of the danger area and the fifth position lies along the path of movement of the load, the at least one second device would be in danger when the load is lifted over the at least one second device. When the fifth position is in proximity of the danger area and the fifth position is changing in the manner that the at least one second device is approaching the load to be moved, the at least one second device may enter the danger area and may eventually even collide with the load. When the fifth position is in proximity of the danger area and the actual weight of the load is greater than the weight of the load (i.e., over-lifting occurs), the actual weight of the load may be too high and may hamper the construction equipment from lifting the load and/or lifting the load may hurt the person or the vehicle in the fifth position if parts of the load break off while lifting.

When it is determined that the alert condition is present, the at least one second device is configured to activate the first alarm on the at least one second device. In an embodiment, the first alarm may be activated manually. Herein, the operator may switch on an alarm button for activating the first alarm. Since, herein, human input is needed for activating the first alarm, a delay may be observed between determination of the presence of the alert condition and the activation of the first alarm. Thus, the safety of the persons on the construction site may be compromised for a time duration equivalent to the delay. In another embodiment, the first alarm may be activated automatically on determining that the alert condition is present. The automatic activation of the first alarm may prevent delay between determination of the presence of the alert condition and the activation of the first alarm. Hence, they are more accurate and may ensure safety of the persons efficiently. The first alarm may notify (i.e., alert) the person carrying the at least one second device about presence of the alarm condition to enable the person to protect themself or may notify the driver of the vehicle on which the at least one second device is arranged about presence of the alarm condition so as to enable the driver to protect the vehicle (and optionally, himself). For example, when the person carrying the at least one second device is in the danger area, the first alarm may notify the person to quickly move out to a safer region on the construction site. It may be noted that a type and severity of alarms may vary depending on a severity of the alert condition that is present. It may also be possible that a given person (for example, a given employee) will be alerted when at least one other person (for example, his or her co-employee(s)) is in the vicinity of or in the danger area.

Optionally, the first alarm is at least one of: a text message, a light indication, a sound, a vibration, a radio signal. A given text message may be displayed on the at least one second device, based on the first alert condition for notification. For example, the given text message may be 'move away immediately' when the at least one second device is in the danger area. For light indication, the at least one second device may include one or more light sources such as light emitting diodes (LEDs), displays, bulbs, and the like. In some embodiments, the one or more light sources may blink for some duration for light indication. In some other embodiments, the one or more light sources may glow continuously for light indication of the alert condition until the alert condition ceases to exist. For example, if the fifth position is in the danger area, the one or more light sources may glow continuously until the at least one second device moves away from the danger area. The first alarm may be a given sound such as a buzzer sound, a beep sound, a verbal warning, a music, and the like, of fixed or varying sound intensity depending on the alert condition. For example, if the fifth position is in danger area the buzzer sound may indicate the person to move away from the danger area swiftly and if the fifth position is in proximity of the danger area, the beep sound may indicate the person to change his/her path. Herein, sound intensity of the buzzer sound may be higher than that of the beep sound. The first alarm may be vibration. Similar to the sound, the vibration may be also of fixed or varying intensity. Herein, the at least one second device may include a vibration motor that may vibrate according to the determined alert condition. For example, if a given second device is attached to an apparel worn by the person and the fifth position of the given second device is in the danger area, the given second device may vibrate profusely to notify the person to move out of the danger area.

Optionally, the danger area comprises a plurality of sub-areas, and wherein the at least one second device is further configured to activate different first alarms for alarm conditions pertaining to different sub-areas amongst the plurality of sub-areas. It will be understood that the entirety of the danger area may not have a constant danger severity level. The areas that are just below the load may have a higher danger severity level than the areas that are farther away from the load. The areas just below the load may be more dangerous. Thus, the entirety of the danger area may be divided into the plurality of sub-areas according to their danger level. Each sub-area may be associated with different first alarms to give an idea of different danger severity levels to the person or the driver (depending on the sub-area of the plurality of sub-areas in which the fifth position is situated).

Optionally, the different first alarms are different from each other in respect of at least one of: a type of a given first alarm, an intensity of a given first alarm, a frequency of activating a given first alarm, a duration of activating a given first alarm. For example, if the danger area includes three sub-areas, the different first alarms may be a given text message, a given light indication, and a given sound for a first sub-area, a second sub-area, and a third sub-area, respectively. Herein, the first sub-area may have lowest danger severity level, the second sub-area may have greater danger severity level than the first sub-area and the third sub-area may have highest danger severity level.

Optionally, the at least one second device is configured to send, to the third device, alert information pertaining to the alert condition. Herein, the alert information may help the operator of the third device to prevent accidents. For example, if in spite of activating the first alarm, the at least one second device remains in the danger area, the third device may automatically stop the construction equipment from lifting the load. Optionally, the alert information is sent by at least one of: an ultrasonic communication link, a light indication, a radio link. In an embodiment, the alert information may be first converted to ultrasonic waves by a transmitter of the at least one second device and the said ultrasonic waves may be sent over the ultrasonic communication link to a receiver of the third device. The third device may decode the said ultrasonic waves to obtain the alert information. In another embodiment, the alert information is sent to the at least one second device by light indication. Herein, light sources such as, LEDs, bulbs, displays and the like of the at least one second device may emit some light that may be detected by the third device to receive the alert information. In another embodiment, the alert information may be sent via the radio link. Herein, a transmitter of the at least one second device may transmit alert information over radio waves via the radio link to the third device. Therefore, although it is possible for the at least one second device to communicate on the radio link, it is not a necessary feature, thus enabling radiation to be minimized.

Optionally, the at least one second device and the third device have at least one first radiotelephone and a second radiotelephone, respectively, and wherein the at least one first radiotelephone and the second radiotelephone enable in providing a voice-directed telephone connection between the at least one second device and the third device. Herein, the person associated with the at least one second device and the operator of the third device may communicate directly over voice to provide information apart from the alert information via a least one first radiotelephone and a second radiotelephone. That is, the operator operating the third device and a given driver or a given person associated with the at least one second device may directly talk to each other for sharing some extra information about the alert condition. For example, the operator may directly talk to the person who is associated with at least one second device and is in the danger area, to move away quickly. Moreover, if there are multiple second devices, then voice-directed telephone connection between them may be established using their corresponding first radio telephones for exchanging information and/or instructions between persons present on the construction site.

Optionally, the first device further comprises at least one first sensor, wherein the first device is further configured to:
- process sensor data of the at least one first sensor, to detect whether the first alarm is activated; and
- when it is detected that the first alarm is activated, send a warning signal to the third device.

In this regard, the first sensor may depend on the first alarm. For example, if the first alarm is the sound, then the first sensor may be an audio detector that may detect the sound. If the first alarm is the light indication, then the first sensor may be a light detector. Similarly, if the first alarm is the vibration, then the first sensor may be a vibration detector that may detect the presence of vibrations. Optionally, the warning signal is sent by at least one of: an ultrasonic communication link, a light indication, a radio link. Based on the received warning signal, the third device may control the construction equipment to prevent any safety hazards such as, overhead lifting of the load.

Optionally, the at least one second device comprises a plurality of second devices, the plurality of second devices being arranged on a plurality of construction equipment, and wherein a given second device is configured to activate the first alarm when a given fifth position of the given second device lies within a predefined distance from at least one other fifth position of at least one other second device. It may be noted that the plurality of construction equipment may be present on the construction site. In some undesirable instances, a given construction equipment of the plurality of construction equipment may collide with at least one other construction equipment, thus, hampering the working of the plurality of construction equipment and posing a safety risk for persons using or in proximity of such construction equipment. Collisions may also damage a given construction equipment. To prevent the collision of the given construction equipment with the at least one other construction equipment, each construction equipment of the plurality of construction equipment may include a second device. The given second device may activate the first alarm when the given second device lies in the predefined distance of the at least one other second device. The predefined distance may lie in a predefined range. For example, the predefined distance may lie in the range of 1 meter to 200 meters. Herein, the predefined distance may be from 1 meter, 10 meters, 20 meters, 30 meters, 40 meters, 50 meters, 60 meters, 70 meters, 80 meters, 90 meters, 100 meters, 110 meters, 120 meters, 130 meters, 140 meters, 150 meters, 160 meters, 170 meters, 180 meters, and 190 meters up to 10 meters, 20 meters, 30 meters, 40 meters, 50 meters, 60 meters, 70 meters, 80 meters, 90 meters, 100 meters, 110 meters, 120 meters, 130 meters, 140 meters, 150 meters, 160 meters, 170 meters, 180 meters, 190 meters, and 200 meters.

Optionally, the warning system further comprises a second sensor communicably coupled to the third device, wherein the third device is further configured to:
- receive, from the second sensor, sensor data indicative of a weight lifted by the construction equipment;
- activate a second alarm when the weight lifted by the construction equipment is greater than or equal to a predefined threshold; and
- deactivate the second alarm when the weight lifted by the construction equipment is less than the predefined threshold.

In this regard, the second sensor may be a weight sensor arranged in the construction equipment to sense the presence/absence of the load and to measure the weight of the load lifted by the construction equipment. It may be appreciated that if the weighted lifted by the construction equipment is higher than the predefined threshold, it poses a threat to the construction equipment and to the person near the load. Hence, the second alarm is activated to notify the crane operator and the persons that the weight lifted by the construction equipment is greater than or equal to the predefined threshold so that the crane operator and the persons may take corrective measures. Moreover, the present description also relates to the method for providing safety at the construction site using the warning system as described above. The various embodiments and variants disclosed above apply mutatis mutandis to the warning system. Optionally, the method further comprises comparing a known position of the base station with the third position by employing a Real-time kinematic positioning technique for generating the first correction signal and the second correction signal.

Optionally, wherein the danger area comprises a plurality of sub-areas, and wherein the method further comprises activating different first alarms for alarm conditions pertaining to different sub-areas amongst the plurality of sub-areas.

Optionally, the least one second device comprises a plurality of second devices, and wherein the method further comprises:
- arranging the plurality of second devices on a plurality of construction equipment; and
- activating the first alarm when a given fifth position of a given second device lies within a predefined distance from at least one other fifth position of at least one other second device.

### DETAILED DESCRIPTION OF THE DRAWINGS

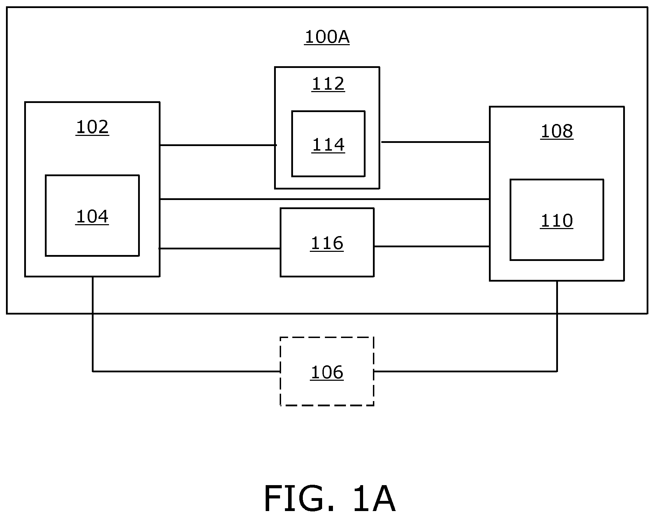

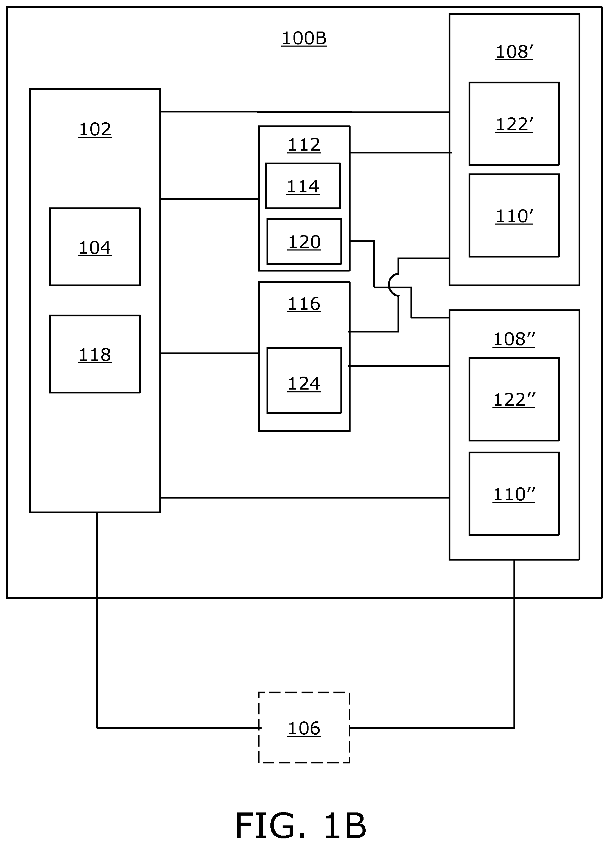

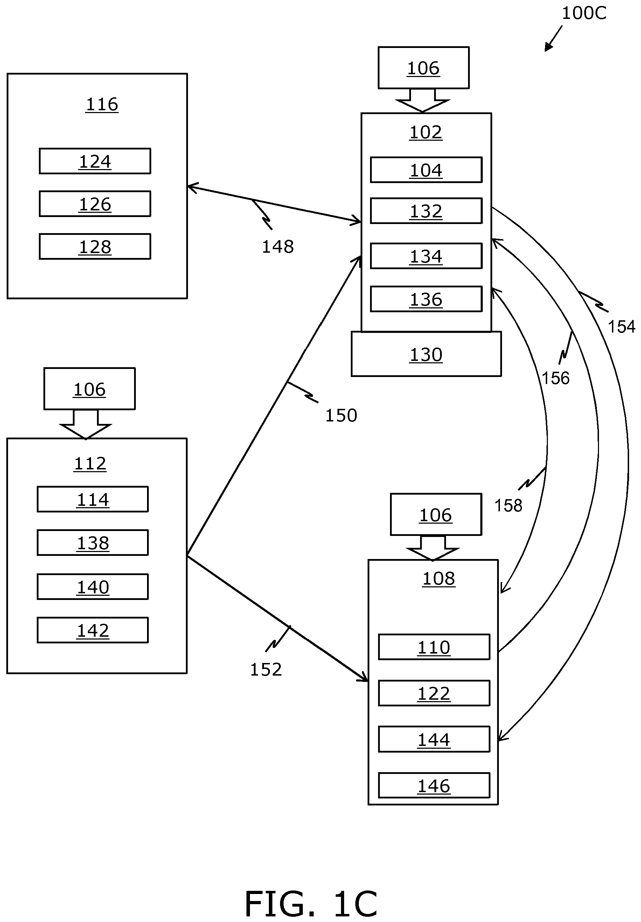

Referring to FIGs. 1A, 1B, and 1C, illustrated are block diagrams of a warning system **100A, 100B,** and **100C,** respectively, for providing safety at a construction site, in accordance with various embodiments of the present disclosure. A warning system (such as the warning systems **100A, 100B,** and **100C)** comprises: a first device **102** comprising a first geo-spatial positioning receiver **104** that receives, in operation, first signals for determining a first position of a load from a geo-spatial positioning system **106;** at least one second device **108** comprising a second geo-spatial positioning receiver **110** that receives, in operation, second signals for determining a second position of the at least one second device **108** from the geo-spatial positioning system **106;** a base station **112** comprising a third geo-spatial positioning receiver **114** that receives, in operation, third signals for determining a third position of the base station **112** from the geo-spatial positioning system **106;** and a third device **116.** The at least one second device **108** is communicably coupled to the first device **102.** The base station **112** is configured to generate a first correction signal and a second correction signal, wherein the base station **112** is communicably coupled to the first device **102** and the at least one second device **108.** The third device **116** enables operation of a construction equipment (not shown) to move the load, wherein the third device **116** is communicably coupled to the first device **102** and the at least one second device **108.** In FIG. 1B, the warning system **100B** comprises the at least one second device **108** (depicted as the second device **108',** and a second device **108")** comprising a second geo-spatial positioning receiver **110'** and a second geo-spatial positioning receiver **110"** respectively. The first device **102** comprises a first sensor **118.** The base station **112** comprises a processor **120.**

In FIGs. 1B and 1C, the at least one second device **108** has a first radiotelephone **122** (depicted as the second device **108'** having a first radiotelephone **122'** and the second device **108"** having a first radiotelephone **122")** and the third device **116** has a second radiotelephone **124.**

In FIG. 1C, the third device **116** is shown to comprise the second radiotelephone **124,** a microcontroller **126,** and a battery or a power supply **128** received from a construction equipment (such as a crane).

The first device **102** is arranged on a load **130.** The first device **102** comprises the first geo-spatial positioning receiver **104,** a radio transceiver **132,** a microcontroller **134,** and a battery or a power supply **136** from the construction equipment. The base station **112** comprises the third geo-spatial positioning receiver **114,** a radio transceiver **138,** a microcontroller **140,** a battery or power supply **142** from the construction equipment. The at least one second device **108** comprises the second geo-spatial positioning receiver **110,** the first radiotelephone **122,** a microcontroller **144** and a battery **146.** At **148,** the third device **116** is configured to send, to the first device **102,** load information of the load **130** and the first device **102** sends, to the third device **116** alert information pertaining to an alert condition. Moreover at **148,** a voice-directed telephone connection is established between the first device **102** and the third device **116.** At **150,** the base station **112** is configured to send a first correction signal to the first device **102.** At **152,** the base station **112** is configured to send a second correction signal to the at least one second device **108.** At **154,** the first device **102** is configured to send danger area information, to the at least one second device **108.** At step **156,** the at least one second device **108** is configured to send, to the first device **106** alert information pertaining to the alert condition. At step **158,** a voice-directed telephone connection is established between the at least one second device **108** and the first device **106.**

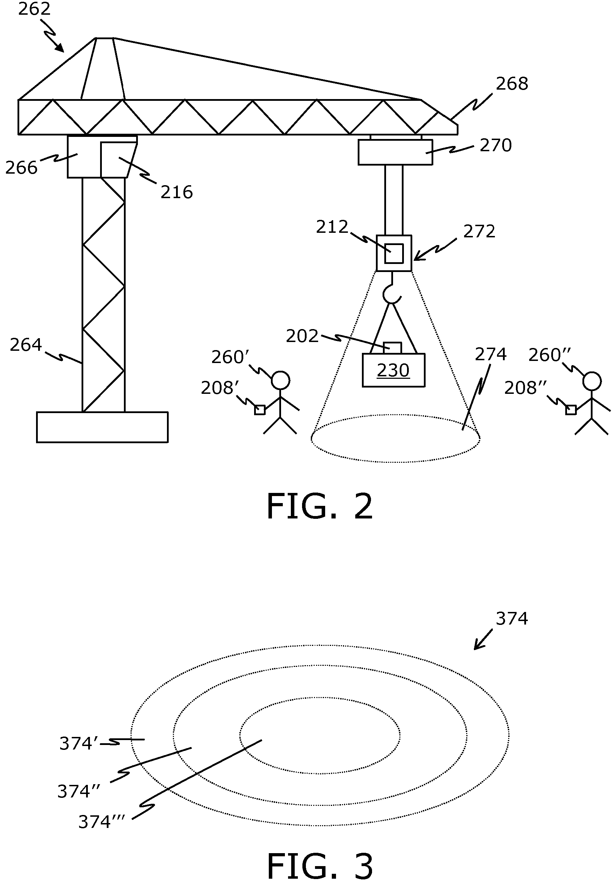

FIG. 2 is an exemplary schematic implementation of a warning system for providing safety at the construction site, in accordance with an embodiment of the present disclosure. Herein, a first device **202** is positioned on a load **230** to be moved. A second device **208'** is carried by first personnel **260'** and a second device **208"** is carried by second personnel **260".** A base station **212** is arranged at a distance from the first device **202.** A construction equipment **262,** which is a tower crane having a tower **264** arranged in and supported on the ground, is used to move (i.e., lift) the load **230.** The tower **264** extends upwards from the ground. The construction equipment **262** has an operator's cab **266** arranged at the top of the tower **264.** The operator's cab **266** has a third device **216** for operating the construction equipment **262.** The third device **216** enables operation of the construction equipment **262** to move the load **230,** wherein the third device **216** is communicably coupled to the first device **202** and the second devices **208', 208".** The third device **216** is not necessarily connected in any way to a control of the construction equipment **262** such as the crane, but is only intended for communication with the first device **202.** The construction equipment **262** further comprises a jib **268** arranged in the tower **264,** and a trolley **270** arranged in the jib **268** so that the trolley **270** can be moved parallel to the jib **268** from the operator's cab **266** when the construction equipment **262** is operated. Attached to the jib **268** is a hook module **272** provided with a crane hook that allows the construction equipment **262** to raise and lower the load **230** with respect to the ground or a level from which the load **230** is to be lifted when the construction equipment **262** is operated. During operation, the load **230** can be moved by the trolley **270,** by an operator. The first device **202** is configured to define a danger area **274** surrounding the load **230,** based at least on a fourth position of the load **230** and load information. FIG. 2 shows a perspective view of the danger area **274.** The danger area **274** is shown to be three-dimensional and extends radially, vertically or laterally outwards from edges of the load **230.**

FIG. 3 is a top view of the danger area of FIG. 2, in accordance with an embodiment of the present disclosure. Herein, a danger area **374** comprises a plurality of sub-areas **374', 374",** and **374"',** wherein a given second device (such as, the second device **208'** and/or the second device **208"** of FIG. 2) is further configured to activate different first alarms for alarm conditions pertaining to different sub-areas amongst the plurality of sub-areas **374', 374",** and **374"'.** The sub-area **374‴** is closest to the load (shown in FIG. 3), while the sub-area **374'** is farthest from the load. These sub-areas **374', 374",** and **374‴** may have different shapes and/or extents.

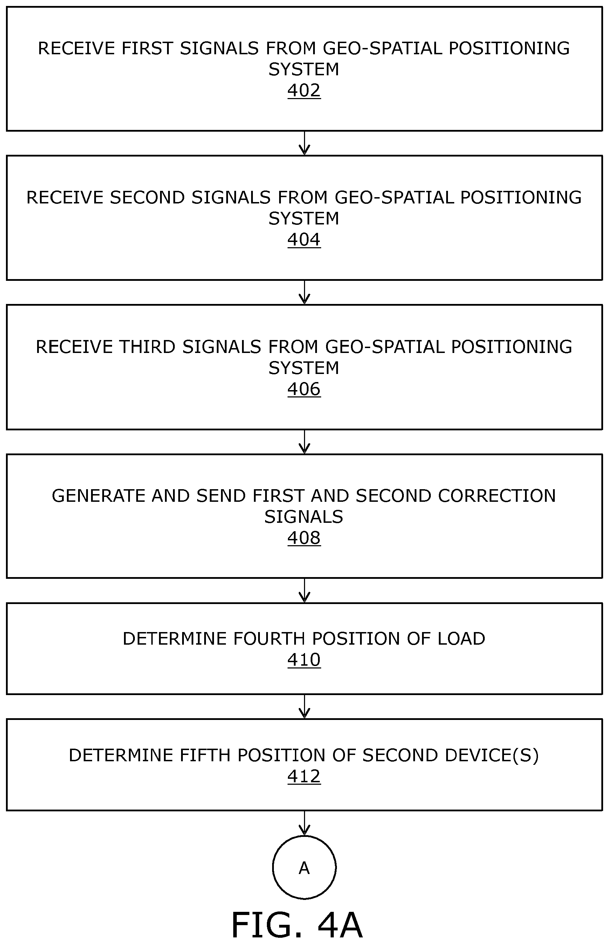

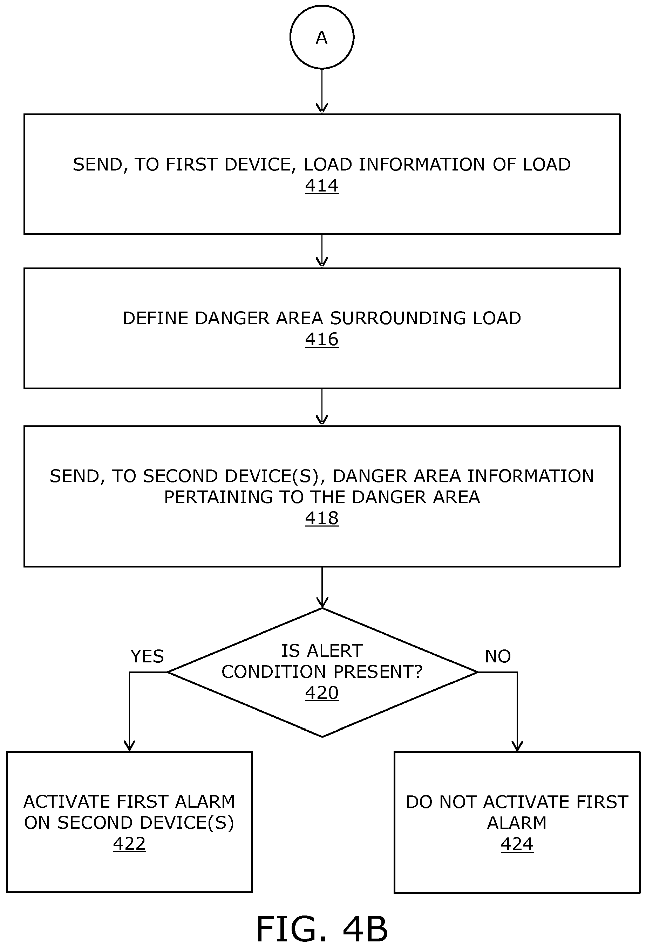

FIGs. 4A and 4B illustrate a flowchart depicting steps of a method for providing safety at a construction site using a warning system, in accordance with an embodiment of the present disclosure. The method includes, at step **402,** receiving first signals from a geo-spatial positioning system for calculating a first position of a load based on the first signals. The method includes, at step **404** receiving second signals from the geo-spatial positioning system for calculating a second position of the at least one second device based on the second signals. The method includes, at step **406,** receiving third signals from the geo-spatial positioning system for calculating a third position of the base station based on the third signals. The method includes, at step **408,** generating a first correction signal and a second correction signal based on the third position, and sending the first correction signal and the second correction signal from the base station to a first device and the at least one second device, respectively. The method includes, at step **410,** determining a fourth position of the load, based on the first position and the first correction signal. The method includes, at step **412,** determining a fifth position of the at least one second device, based on the second position and the second correction signal. The method includes, at step **414,** sending, from a third device to the first device, load information of the load. The method includes, at step **416,** defining a danger area surrounding the load, based at least on the fourth position of the load and the load information. The method includes, at step **418,** sending danger area information, from the first device to the at least one second device, wherein the danger area information pertains to the danger area. The method includes, at step **420,** determining whether an alert condition is present, based on the fifth position and the danger area information. When it is determined that the alert condition is present, the method includes activating a first alarm on the at least one second device at step **422.** When it is determined that the alert condition is not present, the first alarm on the at least one second device is not activated at step **424.**

The steps **402, 404, 406, 408, 410, 412, 414, 416, 418, 420, 422,** and **424** are only illustrative and other alternatives can also be provided where one or more steps are added, one or more steps are removed, or one or more steps are provided in a different sequence without departing from the scope of the claims herein. For example, the steps **402, 404,** and **406** may be performed concurrently.

Modifications to embodiments of the present disclosure described in the foregoing are possible without departing from the scope of the present disclosure as defined by the accompanying claims. Expressions such as "including", "comprising", "incorporating", "have", "is" used to describe, and claim the present disclosure are intended to be construed in a non-exclusive manner, namely allowing for items, components or elements not explicitly described also to be present. Reference to the singular is also to be construed to relate to the plural.

## Claims

1. A warning system (100A, 100B, 100C) for providing safety at a construction site, the warning system comprising:
a first device (102, 202) comprising a first geo-spatial positioning receiver (104) for receiving, in operation, a first signals from a geo-spatial positioning system (106), the first geo-spatial positioning receiver being configured to calculate a first position of a load (130, 230) based on the first signals;
at least one second device (108, 108', 108", 208', 208") comprising a second geo-spatial positioning receiver (110, 110', 110") for receiving, in operation, a second signals from the geo-spatial positioning system, the second geo-spatial positioning receiver being configured to calculate a second position of the at least one second device based on the second signals, the at least one second device being communicably coupled to the first device;
a base station (112, 212) comprising a third geo-spatial positioning receiver (114) for receiving, in operation, a third signals from the geo-spatial positioning system, the third geo-spatial positioning receiver being configured to calculate a third position of the base station based on the third signals, the base station being configured to generate a first correction signal and a second correction signal based on the third position, wherein the base station is communicably coupled to the first device and the at least one second device; and
a third device (116, 216) for enabling operation of a construction equipment (262) to move the load, wherein the third device is communicably coupled to the first device and the at least one second device,
wherein,
- the base station is configured to send the first correction signal and the second correction signal to the first device and the at least one second device, respectively;
- the first device is configured to determine a fourth position of the load, based on the first position and the first correction signal;
- the at least one second device is configured to determine a fifth position of the at least one second device, based on the second position and the second correction signal;
- the third device is configured to send, to the first device, load information of the load;
- the first device is configured to define a danger area (274, 374) surrounding the load that changes dynamically as at least the fourth position of the load and the load information change;
- the first device is configured to send danger area information, to the at least one second device, wherein the danger area information pertains to the danger area;
- the at least one second device is configured to determine whether an alert condition is present, based on the fifth position and the danger area information; and
- when it is determined that the alert condition is present, the at least one second device is configured to activate a first alarm on the at least one second device.

2. A warning system (100A, 100B, 100C) according to claim 1, wherein the load information comprises at least one of: a size of the load (130, 230), a weight of the load, a width of the load, a lifting height of the load, a direction of lifting the load, a speed of lifting the load, a path of lifting the load, a swing of the load, a quality of the load, a purpose of lifting the load, a time of lifting the load, a duration of lifting the load.

3. A warning system (100A, 100B, 100C) according to claim 1 or 2, wherein the danger area information comprises at least one of: the fourth position of the load (130, 230), the load information, a size of the danger area (274, 374), a shape of the danger area, a function indicating a manner in which the size and/or the shape of the danger area varies according to the fourth position and the load information, a number of sub-areas within the danger area, sizes and relative arrangements of the sub-areas.

4. A warning system (100A, 100B, 100C) according to any of the preceding claims, wherein the first device is configured to define the danger area in such a way that the size of the danger area changes dynamically as the load is moved at different speeds.

5. A warning system (100A, 100B, 100C) according to any of the preceding claims wherein the first device is configured to define the danger area in such a way that the size of the danger area changes dynamically as a function of the lifting height of the load and as a function of the speed of lifting the load.

6. A warning system (100A, 100B, 100C) according to any of the preceding claims wherein the size of the danger area changes as a function of the path of lifting the load.

7. A warning system (100A, 100B, 100C) according to any of the preceding claims wherein the size of the danger area changes linearly, non-linearly, or stepwise as a function of speed of lifting the load and/or lifting height of the load, or the path of lifting the load.

8. A warning system (100A, 100B, 100C) according to any of the preceding claims, wherein the alert condition is at least one of:
- the fifth position lies in the danger area (274, 374);
- the fifth position is in proximity of the danger area and the fifth position lies along a path of movement of the load (130, 230);
- the fifth position is in proximity of the danger area and the fifth position is changing in a manner that the at least one second device (108) is approaching the load to be moved;
- the fifth position is in proximity of the danger area, and an actual weight of the load is greater than the weight of the load; and
- a given fifth position of one of the at least one second device lies in or is in proximity of the danger area.

9. A warning system (100A, 100B, 100C) according to any of the preceding claims, wherein the at least one second device (108) is configured to send, to the third device (116, 216) alert information pertaining to the alert condition.

10. A warning system (100A, 100B, 100C) according to any of the preceding claims, wherein the at least one second device (108) comprises a plurality of second devices (108', 108", 208', 208"), the plurality of second devices being arranged on a plurality of construction equipment (262), and wherein a given second device is configured to activate the first alarm when a given fifth position of the given second device lies within a predefined distance from at least one other fifth position of at least one other second device.

11. A method for providing safety at a construction site using a warning system (100A, 100B, 100C), the method comprising:
- receiving first signals from a geo-spatial positioning system (106) for calculating a first position of a load (130, 230) based on the first signals;
- receiving second signals from the geo-spatial positioning system for calculating a second position of at least one second device (108) based on the second signals;
- receiving third signals from the geo-spatial positioning system for calculating a third position of a base station (112, 212);
- generating a first correction signal and a second correction signal based on the third position, and sending the first correction signal and the second correction signal from the base station to a first device (102, 202) and the at least one second device, respectively;
- determining a fourth position of the load, based on the first position and the first correction signal;
- determining a fifth position of the at least one second device, based on the second position and the second correction signal;
- sending, from a third device (116, 216) to the first device, load information of the load;
- defining a danger area (274, 374) surrounding the load that changes dynamically as at least the fourth position of the load and the load information change;
- sending danger area information, from the first device to the at least one second device, wherein the danger area information pertains to the danger area;
- determining whether an alert condition is present, based on the fifth position and the danger area information; and
- when it is determined that the alert condition is present, activating a first alarm on the at least one second device.

12. A method according to claim 11, wherein the method further comprises comparing a known position of the base station (112, 212) with the third position by employing a Real-time kinematic positioning technique for generating the first correction signal and the second correction signal.

13. A method according to claim 11, wherein defining the danger area, by the first device, in such a way that the size of the danger area changes dynamically as the load is moved at different speeds.

14. A method according to any of the preceding claims 11-13, wherein defining the danger area, by the first device, in such a way that the size of the danger area changes dynamically as a function of the lifting height of the load and as a function of the speed of lifting the load.

15. A method according to any of the preceding claims 11-14 wherein changing the size of the danger area dynamically as a function of the path of lifting the load.

## Patentansprüche

1. Warnsystem (100A, 100B, 100C) zum Bereitstellen von Sicherheit auf einer Baustelle, das Warnsystem umfassend:
eine erste Vorrichtung (102, 202), umfassend einen ersten Empfänger (104) für georäumliche Positionierung, zum Empfangen, in Betrieb, eines ersten Signals von einem System (106) für georäumliche Positionierung, wobei der erste Empfänger für georäumliche Positionierung konfiguriert ist, um basierend auf den ersten Signalen eine erste Position einer Last (130, 230) zu berechnen;
mindestens eine zweite Vorrichtung (108, 108', 108", 208', 208"), umfassend einen zweiten Empfänger (110, 110', 110") für georäumliche Positionierung, zum Empfange, in Betrieb, eines zweiten Signals von dem System für georäumliche Positionierung, wobei der zweite Empfänger für georäumliche Positionierung konfiguriert ist, um eine zweite Position der mindestens einen zweiten Vorrichtung basierend auf den zweiten Signalen zu berechnen, wobei die mindestens eine zweite Vorrichtung mit der ersten Vorrichtung kommunikativ gekoppelt ist;
eine Basisstation (112, 212), umfassend einen dritten Empfänger (114) für georäumliche Positionierung, zum Empfangen, in Betrieb, eines dritten Signals von dem System für georäumliche Positionierung, wobei der dritte Empfänger für georäumliche Positionierung konfiguriert ist, um eine dritte Position der Basisstation basierend auf den dritten Signalen zu berechnen, wobei die Basisstation konfiguriert ist, um ein erstes Korrektursignal und ein zweites Korrektursignal basierend auf der dritten Position zu erzeugen, wobei die Basisstation mit der ersten Vorrichtung und der mindestens einen zweiten Vorrichtung kommunikativ gekoppelt ist; und
eine dritte Vorrichtung (116, 216) zum Ermöglichen eines Betriebs einer Baumaschine (262), um die Last zu bewegen, wobei die dritte Vorrichtung mit der ersten Vorrichtung und der mindestens einen zweiten Vorrichtung kommunikativ gekoppelt ist,
wobei
- die Basisstation konfiguriert ist, um das erste Korrektursignal und das zweite Korrektursignal an die erste Vorrichtung beziehungsweise die mindestens eine zweite Vorrichtung zu senden;
- die erste Vorrichtung konfiguriert ist, um eine vierte Position der Last basierend auf der ersten Position und dem ersten Korrektursignal zu bestimmen;
- die mindestens eine zweite Vorrichtung konfiguriert ist, um eine fünfte Position der mindestens einen zweiten Vorrichtung basierend auf der zweiten Position und dem zweiten Korrektursignal zu bestimmen;
- die dritte Vorrichtung konfiguriert ist, um, an die erste Vorrichtung, Lastinformationen der Last zu senden;
- die erste Vorrichtung konfiguriert ist, um einen Gefahrenbereich (274, 374) zu definieren, der die Last umgibt, der sich dynamisch ändert, wenn sich mindestens die vierte Position der Last und die Lastinformationen ändern;
- die erste Vorrichtung konfiguriert ist, um Gefahrenbereichsinformationen an die mindestens eine zweite Vorrichtung zu senden, wobei sich die Gefahrenbereichsinformationen auf den Gefahrenbereich beziehen;
- die mindestens eine zweite Vorrichtung konfiguriert ist, um basierend auf der fünften Position und der Gefahrenbereichsinformationen zu bestimmen, ob ein Alarmzustand vorliegt; und
- wenn bestimmt wird, dass der Alarmzustand vorliegt, die mindestens eine zweite Vorrichtung konfiguriert ist, um einen ersten Alarm auf der mindestens einen zweiten Vorrichtung zu aktivieren.

2. Warnsystem (100A, 100B, 100C) nach Anspruch 1, wobei die Lastinformationen mindestens eines umfassen von: einer Größe der Last (130, 230), einem Gewicht der Last, einer Breite der Last, einer Hubhöhe der Last, einer Hubrichtung der Last, einer Hubgeschwindigkeit der Last, einem Hubweg der Last, einem Schwingen der Last, einer Qualität der Last, einem Zweck des Hubs der Last, einem Zeitpunkt des Hubs der Last, einer Dauer des Hubs der Last.

3. Warnsystem (100A, 100B, 100C) nach Anspruch 1 oder 2, wobei die Gefahrenbereichsinformationen mindestens eines umfassen von: der vierten Position der Last (130, 230), den Lastinformationen, einer Größe des Gefahrenbereichs (274, 374), einer Form des Gefahrenbereichs, einer Funktion, die angibt, wie die Größe und/oder die Form des Gefahrenbereichs gemäß der vierten Position und den Lastinformationen variiert, einer Anzahl von Unterbereichen innerhalb des Gefahrenbereichs, Größen und relativen Anordnungen der Unterbereiche.

4. Warnsystem (100A, 100B, 100C) nach einem der vorstehenden Ansprüche, wobei die erste Vorrichtung konfiguriert ist, um den Gefahrenbereich auf solche Weise zu definieren, dass sich die Größe des Gefahrenbereichs dynamisch ändert, wenn die Last mit unterschiedlichen Geschwindigkeiten bewegt wird.

5. Warnsystem (100A, 100B, 100C) nach einem der vorstehenden Ansprüche, wobei die erste Vorrichtung konfiguriert ist, um den Gefahrenbereich auf solche Weise zu definieren, dass sich die Größe des Gefahrenbereichs dynamisch in Abhängigkeit der Hubhöhe der Last und in Abhängigkeit der Hubgeschwindigkeit der Last ändert.

6. Warnsystem (100A, 100B, 100C) nach einem der vorstehenden Ansprüche, wobei sich die Größe des Gefahrenbereichs in Abhängigkeit des Hubwegs der Last ändert.

7. Warnsystem (100A, 100B, 100C) nach einem der vorstehenden Ansprüche, wobei sich die Größe des Gefahrenbereichs linear, nichtlinear oder schrittweise in Abhängigkeit der Hubgeschwindigkeit der Last und/oder der Hubhöhe der Last oder des Hubwegs der Last ändert.

8. Warnsystem (100A, 100B, 100C) nach einem der vorstehenden Ansprüche, wobei der Alarmzustand mindestens eines ist von:
- die fünfte Position liegt in dem Gefahrenbereich (274, 374);
- die fünfte Position liegt in der Nähe des Gefahrenbereichs und die fünfte Position liegt entlang eines Bewegungswegs der Last (130, 230);
- die fünfte Position liegt in der Nähe des Gefahrenbereichs und die fünfte Position verändert sich so, dass sich die mindestens eine zweite Vorrichtung (108) der zu bewegenden Last nähert;
- die fünfte Position liegt in der Nähe des Gefahrenbereichs und ein tatsächliches Gewicht der Last ist größer als das Gewicht der Last; und
- eine bestimmte fünfte Position einer der mindestens einen zweiten Vorrichtung liegt in dem Gefahrenbereich oder in dessen Nähe.

9. Warnsystem (100A, 100B, 100C) nach einem der vorstehenden Ansprüche, wobei die mindestens eine zweite Vorrichtung (108) konfiguriert ist, um, an die dritte Vorrichtung (116, 216), Warninformationen bezüglich des Warnzustands zu senden.

10. Warnsystem (100A, 100B, 100C) nach einem der vorstehenden Ansprüche, wobei die mindestens eine zweite Vorrichtung (108) eine Vielzahl von zweiten Vorrichtungen (108', 108", 208', 208") umfasst, wobei die Vielzahl von zweiten Vorrichtungen auf einer Vielzahl von Baumaschinen (262) angeordnet ist, und wobei eine gegebene zweite Vorrichtung konfiguriert ist, um den ersten Alarm zu aktivieren, wenn eine gegebene fünfte Position der gegebenen zweiten Vorrichtung innerhalb einer vordefinierten Distanz von mindestens einer anderen fünften Position mindestens einer anderen zweiten Vorrichtung liegt.

11. Verfahren zum Bereitstellen der Sicherheit auf einer Baustelle unter Verwendung eines Warnsystems (100A, 100B, 100C), das Verfahren umfassend:
- Empfangen erster Signale von einem System (106) für georäumliche Positionierung zum Berechnen einer ersten Position einer Last (130, 230) basierend auf den ersten Signalen;
- Empfangen zweiter Signale von dem System für georäumliche Positionierung zum Berechnen einer zweiten Position mindestens einer zweiten Vorrichtung (108) basierend auf den zweiten Signalen;
- Empfangen dritter Signale von dem System für georäumliche Positionierung zum Berechnen einer dritten Position einer Basisstation (112, 212);
- Erzeugen eines ersten Korrektursignals und eines zweiten Korrektursignals basierend auf der dritten Position und Senden des ersten Korrektursignals und des zweiten Korrektursignals von der Basisstation an eine erste Vorrichtung (102, 202) beziehungsweise die mindestens eine zweite Vorrichtung;
- Bestimmen einer vierten Position der Last basierend auf der ersten Position und dem ersten Korrektursignal;
- Bestimmen einer fünften Position der mindestens einen zweiten Vorrichtung basierend auf der zweiten Position und dem zweiten Korrektursignal;
- Senden, von einer dritten Vorrichtung (116, 216) an die erste Vorrichtung, von Lastinformationen der Last;
- Definieren eines Gefahrenbereichs (274, 374), der die Last umgibt, der sich dynamisch ändert, wenn sich mindestens die vierte Position der Last und die Lastinformationen ändern;
- Senden von Gefahrenbereichsinformationen von der ersten Vorrichtung an die mindestens eine zweite Vorrichtung, wobei sich die Gefahrenbereichsinformationen auf den Gefahrenbereich beziehen;
- Bestimmen, ob ein Alarmzustand vorliegt, basierend auf der fünften Position und den Gefahrenbereichsinformationen; und
- wenn bestimmt wird, dass der Alarmzustand vorliegt, Aktivieren eines ersten Alarms auf der mindestens einen zweiten Vorrichtung.

12. Verfahren nach Anspruch 11, wobei das Verfahren ferner ein Vergleichen einer bekannten Position der Basisstation (112, 212) mit der dritten Position umfasst, durch ein Einsetzen einer kinematischen Echtzeit-Positionierungstechnik zum Erzeugen des ersten Korrektursignals und des zweiten Korrektursignals.

13. Verfahren nach Anspruch 11, wobei das Definieren des Gefahrenbereichs durch die erste Vorrichtung auf solche Weist erfolgt, dass sich die Größe des Gefahrenbereichs dynamisch ändert, wenn die Last mit unterschiedlichen Geschwindigkeiten bewegt wird.

14. Verfahren nach einem der vorstehenden Ansprüche 11 bis 13, wobei sich der Gefahrenbereich dynamisch in Abhängigkeit der Hubhöhe der Last und in Abhängigkeit der Hubgeschwindigkeit der Last ändert.

15. Verfahren nach einem der vorstehenden Ansprüche 11 bis 14, wobei die Größe des Gefahrenbereichs dynamisch in Abhängigkeit des Hubwegs der Last geändert wird.

## Revendications

1. Système d'avertissement (100A, 100B, 100C) permettant d'assurer la sécurité sur un chantier de construction, le système d'avertissement comprenant :
un premier dispositif (102, 202) comprenant un premier récepteur de positionnement géospatial (104) pour recevoir, lors du fonctionnement, de premiers signaux à partir d'un système de positionnement géospatial (106), le premier récepteur de positionnement géospatial étant configuré pour calculer une première position d'une charge (130, 230) sur la base des premiers signaux ;
au moins un deuxième dispositif (108, 108', 108", 208', 208") comprenant un deuxième récepteur de positionnement géospatial (110, 110', 110") pour recevoir, lors du fonctionnement, de deuxièmes signaux à partir du système de positionnement géospatial, le deuxième récepteur de positionnement géospatial étant configuré pour calculer une deuxième position de l'au moins un deuxième dispositif sur la base des deuxièmes signaux, l'au moins un deuxième dispositif étant couplé en communication au premier dispositif ;
une station de base (112, 212) comprenant un troisième récepteur de positionnement géospatial (114) pour recevoir, lors du fonctionnement, de troisièmes signaux à partir du système de positionnement géospatial, le troisième récepteur de positionnement géospatial étant configuré pour calculer une troisième position de la station de base sur la base des troisièmes signaux, la station de base étant configurée pour générer un premier signal de correction et un second signal de correction sur la base de la troisième position, dans lequel la station de base est couplée en communication au premier dispositif et à l'au moins un deuxième dispositif ; et
un troisième dispositif (116, 216) permettant le fonctionnement d'un engin de chantier (262) pour déplacer la charge, dans lequel le troisième dispositif est couplé en communication au premier dispositif et à l'au moins un deuxième dispositif,
dans lequel
- la station de base est configurée pour envoyer le premier signal de correction et le second signal de correction au premier dispositif et à l'au moins un deuxième dispositif, respectivement ;
- le premier dispositif est configuré pour déterminer une quatrième position de la charge, sur la base de la première position et du premier signal de correction ;
- l'au moins un deuxième dispositif est configuré pour déterminer une cinquième position de l'au moins un deuxième dispositif, sur la base de la deuxième position et du second signal de correction ;
- le troisième dispositif est configuré pour envoyer, au premier dispositif, des informations de charge de la charge ;
- le premier dispositif est configuré pour définir une zone de danger (274, 374) entourant la charge qui change dynamiquement au fur et à mesure qu'au moins la quatrième position de la charge et les informations de charge changent ;
- le premier dispositif est configuré pour envoyer des informations de zone de danger à l'au moins un deuxième dispositif, dans lequel les informations de zone de danger se rapportent à la zone de danger ;
- l'au moins un deuxième dispositif est configuré pour déterminer si une condition d'alerte est présente, sur la base de la cinquième position et des informations de zone de danger ; et
- lorsqu'il est déterminé que la condition d'alerte est présente, l'au moins un deuxième dispositif est configuré pour activer une première alarme sur l'au moins un deuxième dispositif.

2. Système d'avertissement (100A, 100B, 100C) selon la revendication 1, dans lequel les informations de charge comprennent au moins l'un parmi : une taille de la charge (130, 230), un poids de la charge, une largeur de la charge, une hauteur de levage de la charge, une direction de levage de la charge, une vitesse de levage de la charge, une trajectoire de levage de la charge, un balancement de la charge, une qualité de la charge, un but de levage de la charge, un moment de levage de la charge, une durée de levage de la charge.

3. Système d'avertissement (100A, 100B, 100C) selon la revendication 1 ou 2, dans lequel les informations de zone de danger comprennent au moins l'un parmi : la quatrième position de la charge (130, 230), les information de charge, une taille de la zone de danger (274, 374), une forme de la zone de danger, une fonction indiquant une manière dont la taille et/ou la forme de la zone de danger varient selon la quatrième position et des informations de charge, un nombre de sous-zones dans la zone de danger, des tailles et des dispositions relatives des sous-zones.

4. Système d'avertissement (100A, 100B, 100C) selon l'une quelconque des revendications précédentes, dans lequel le premier dispositif est configuré pour définir la zone de danger de telle sorte que la taille de la zone de danger change dynamiquement lorsque la charge est déplacée à différentes vitesses.

5. Système d'avertissement (100A, 100B, 100C) selon l'une quelconque des revendications précédentes, dans lequel le premier dispositif est configuré pour définir la zone de danger de telle sorte que la taille de la zone de danger change dynamiquement en fonction de la hauteur de levage de la charge et en fonction de la vitesse de levage de la charge.

6. Système d'avertissement (100A, 100B, 100C) selon l'une quelconque des revendications précédentes, dans lequel la taille de la zone de danger change en fonction de la trajectoire de levage de la charge.

7. Système d'avertissement (100A, 100B, 100C) selon l'une quelconque des revendications précédentes, dans lequel la taille de la zone de danger change de manière linéaire, non linéaire ou progressive en fonction de la vitesse de levage de la charge et/ou de la hauteur de levage de la charge, ou de la trajectoire de levage de la charge.

8. Système d'avertissement (100A, 100B, 100C) selon l'une quelconque des revendications précédentes, dans lequel la condition d'alerte est au moins l'une parmi :
- la cinquième position se situe dans la zone de danger (274, 374) ;
- la cinquième position se trouve à proximité de la zone de danger et la cinquième position se situe le long d'une trajectoire de déplacement de la charge (130, 230) ;
- la cinquième position se trouve à proximité de la zone de danger et la cinquième position change de manière à ce que l'au moins un deuxième dispositif (108) s'approche de la charge à déplacer ;
- la cinquième position se trouve à proximité de la zone de danger, et un poids réel de la charge est supérieur au poids de la charge ; et
- une cinquième position donnée de l'un de l'au moins un deuxième dispositif se situe dans la zone de danger ou se trouve à proximité de celle-ci.

9. Système d'avertissement (100A, 100B, 100C) selon l'une quelconque des revendications précédentes, dans lequel l'au moins un deuxième dispositif (108) est configuré pour envoyer au troisième dispositif (116, 216) des informations d'alerte se rapportant à la condition d'alerte.

10. Système d'avertissement (100A, 100B, 100C) selon l'une quelconque des revendications précédentes, dans lequel l'au moins un deuxième dispositif (108) comprend une pluralité de deuxièmes dispositifs (108', 108", 208', 208"), la pluralité de deuxièmes dispositifs étant disposée sur une pluralité d'engins de chantier (262), et dans lequel un deuxième dispositif donné est configuré pour activer la première alarme lorsqu'une cinquième position donnée du deuxième dispositif donné se situe à une distance prédéfinie d'au moins une autre cinquième position d'au moins un autre deuxième dispositif.

11. Procédé permettant d'assurer la sécurité sur un chantier de construction à l'aide d'un système d'avertissement (100A, 100B, 100C), le procédé comprenant :
- la réception de premiers signaux à partir d'un système de positionnement géospatial (106) pour calculer une première position d'une charge (130, 230) sur la base des premiers signaux ;
- la réception de deuxièmes signaux à partir du système de positionnement géospatial pour calculer une deuxième position d'au moins un deuxième dispositif (108) sur la base des deuxièmes signaux ;
- la réception de troisièmes signaux à partir du système de positionnement géospatial pour calculer une troisième position d'une station de base (112, 212) ;
- la génération d'un premier signal de correction et d'un second signal de correction sur la base de la troisième position, et l'envoi du premier signal de correction et du second signal de correction à partir de la station de base à un premier dispositif (102, 202) et à l'au moins un deuxième dispositif, respectivement ;
- la détermination d'une quatrième position de la charge, sur la base de la première position et du premier signal de correction ;
- la détermination d'une cinquième position de l'au moins un deuxième dispositif, sur la base de la deuxième position et du second signal de correction ;
- l'envoi, à partir d'un troisième dispositif (116, 216) au premier dispositif, d'informations de charge de la charge ;
- la définition d'une zone de danger (274, 374) entourant la charge qui change dynamiquement au fur et à mesure qu'au moins la quatrième position de la charge et les informations de charge changent ;
- l'envoi d'informations de zone de danger, à partir du premier dispositif à l'au moins un deuxième dispositif, dans lequel les informations de zone de danger se rapportent à la zone de danger ;
- le fait de déterminer si une condition d'alerte est présente, sur la base de la cinquième position et des informations de zone de danger ; et
- lorsqu'il est déterminé que la condition d'alerte est présente, l'activation d'une première alarme sur l'au moins un deuxième dispositif.

12. Procédé selon la revendication 11, dans lequel le procédé comprend en outre la comparaison d'une position connue de la station de base (112, 212) avec la troisième position en utilisant une technique de positionnement cinématique en temps réel pour générer le premier signal de correction et le second signal de correction.

13. Procédé selon la revendication 11, dans lequel la définition de la zone de danger, par le premier dispositif, est telle que la taille de la zone de danger change dynamiquement lorsque la charge est déplacée à différentes vitesses.

14. Procédé selon l'une quelconque des revendications précédentes 11 à 13, dans lequel la zone de danger change dynamiquement en fonction de la hauteur de levage de la charge et en fonction de la vitesse de levage de la charge.

15. Procédé selon l'une quelconque des revendications précédentes 11 à 14, dans lequel la taille de la zone de danger change dynamiquement en fonction de la trajectoire de levage de la charge.
